# EUROPÄISCHE PATENTSCHRIFT

(11) **EP 3 629 058 B1**
(45) Veröffentlichungstag und Bekanntmachung des Hinweises auf die Patenterteilung: **26.02.2025**
(21) Anmeldenummer: 19191909.1
(22) Anmeldetag: 15.08.2019
(51) Int. Cl.: G01S 15/931, G01S 7/52

(54) **VERFAHREN ZUR DURCHFÜHRUNG EINER DIAGNOSE ODER EINES SELBSTTESTS IN EINEM ULTRASCHALL-MESSSYSTEM**
METHOD FOR CARRYING OUT A DIAGNOSIS OR A SELF-TEST IN AN ULTRASOUND MONITORING SYSTEM
PROCÉDÉ DE MISE EN UVRE D'UN DIAGNOSTIC OU D'UN ESSAI AUTOMATIQUE DANS UN SYSTÈME DE MESURE PAR ULTRASONS

(30) Priorität: 27.09.2018 EP 18197281
(43) Veröffentlichungstag der Anmeldung: 01.04.2020
(73) Patentinhaber: Elmos Semiconductor SE, 44227 Dortmund (DE)
(72) Erfinder: KREISS, Dennis, 44227 Dortmund (DE)
(74) Vertreter: dompatent von Kreisler Selting Werner - Partnerschaft von Patent- und Rechtsanwälten mbB

(56) Entgegenhaltungen:
- EP-A1- 0 312 845
- WO-A1-2019/096166
- DE-A1- 102005 052 633
- DE-B4- 10 164 760
- DE-U1- 202018 006 349
- DE-U1- 202018 006 349
- JP-A- 2008 256 521
- JP-A- S59 151 076
- US-A- 5 269 188

## Beschreibung

Die Erfindung betrifft ein Verfahren zur Detektion in Objekten in einem Erfassungsraum im Umfeld eines Fahrzeugs mittels eines Ultraschall-Messsystems und zur Durchführung eines Selbsttests eines Ultraschall-Empfangselements des Ultraschall-Messsystems, wobei das Ultraschall-Messsystem zusätzlich zu dem am Fahrzeug angeordneten Ultraschall-Empfangselement ein ebenfalls am Fahrzeug in einem bekannten Abstand zu dem Ultraschall-Empfangselement angeordnetes Ultraschall-Sendeelement aufweist.

Ultraschall-Messsysteme für die Abstandserkennung im Umfeld eines Fahrzeugs sind vielfältig im Einsatz. Ein derartiges Ultraschall-Messsystem weist mindestens ein Ultraschall-Sendeelement und mindestens ein Ultraschall-Empfangselement auf. Oftmals werden sogenannte Ultraschall-Transducer eingesetzt, die ein Schwingelement aufweisen, das zum Aussenden eines Ultraschall-Messsignals elektrisch angesteuert wird und in der anschließenden Empfangsphase durch das an einem Objekt reflektierte Ultraschall-Messsignal mechanisch zum Schwingen angeregt wird. In letzter Zeit werden aber vermehrt auch Ultraschall-Vorrichtungen eingesetzt, bei denen ein mikromechanisches Ultraschall-Sendeelement mit einem mikromechanischen Ultraschall-Empfangselement in einem Gehäuse verbaut oder unmittelbar nebeneinander angeordnet sind. Auch derartige Vorrichtungen werden im Sinne dieser Erfindung als Ultraschall-Transducer bezeichnet.

Die Anforderungen an die Zuverlässigkeit der Funktionalität von Ultraschall-Messsystemen steigen stetig. Ein Grund dafür ist, dass auf Ultraschall-Messsystemen basierende Fahrerassistenzsysteme zuverlässig arbeiten müssen. Daher ist man in zunehmendem Maße bestrebt, Ultraschall-Messsysteme für Fahrzeuganwendungen durch Diagnosen und/oder Selbsttests auf ihre Funktionalität hin zu untersuchen.

Bekannte Verfahren zur Überprüfung der Funktionstüchtigkeit von Ultraschall-Messsystemen für insbesondere Automotive-Anwendungen sind in DE-B-101 64 760, JP-A-S59 151076, EP-A-0 312 845, DE-A-10 2005 052 633, JP-A-2008 256521 und WO-A-2019/096166 (Dokument gemäß Art. 54 (3) EPÜ) beschrieben. Bei diesen Ultraschall-Messsystemen erfolgt die Überprüfung anhand von Plausibilitätsbetrachtungen, die im Zusammenhang mit dem Empfang von Ultraschall-Signalen angestellt werden.

Aus US-A-5 269 188 ist ein Ultraschall-Messsystem für die berührungslose Materialuntersuchung bekannt, bei dem der oder die Ultraschall-Sensoren Selbsttests durchführen.

Bisher erfolgen derartige Funktionsüberprüfungen in Zeiträumen, in denen nicht gemessen werden kann. Damit aber stehen die Ultraschall-Messsysteme leider nicht durchgängig für Messzwecke, wie es für die Detektion von Objekten im Umfeld eines Fahrzeugs an sich erforderlich ist, zur Verfügung.

Aufgabe der Erfindung ist es daher, ein Verfahren zur Detektion von Objekten in einem Erfassungsraum im Umfeld eines Fahrzeugs mittels eines Ultraschall-Messsystems und zur Durchführung eines Selbsttests des Ultraschall-Messsystems anzugeben, bei dem die Durchführung eines Selbsttests eines Ultraschall-Empfangselements und gegebenenfalls auch eines Ultraschall-Sendeelements nicht zu Lasten der Verfügbarkeit des Messsystems für die Detektion von potentiellen Objekten im Erfassungsraum geht.

Zur Lösung dieser Aufgabe wird mit der Erfindung ein Verfahren zur Detektion von Objekten in einem Erfassungsraum im Umfeld eines Fahrzeugs mittels eines Ultraschall-Messsystems und zur Durchführung eines Selbsttests eines Ultraschall-Empfangselements des Ultraschall-Messsystems vorgeschlagen, wobei das Ultraschall-Messsystem zusätzlich zu dem am Fahrzeug angeordneten Ultraschall-Empfangselement ein ebenfalls am Fahrzeug in einem bekannten Abstand zu dem Ultraschall-Empfangselement angeordnetes Ultraschall-Sendeelement aufweist, wobei bei dem Verfahren
- mittels eines Ultraschall-Sendeelements während eines Messzyklus zwecks Detektion von Objekten in dem Erfassungsraum ein Ultraschall-Messsignal ausgesendet wird,
- innerhalb eines durch die Ausbreitungsgeschwindigkeit von Ultraschall-Signalen und den Abstand zwischen dem Ultraschall-Sendeelement und dem Ultraschall-Empfangselement definierten, mit der Aussendung des Ultraschall-Messsignals beginnenden Zeitintervalls, innerhalb dessen das von dem Ultraschall-Sendeelement ausgesendete Messsignal das Ultraschall-Empfangselement noch nicht erreicht hat, das Ultraschall-Empfangselement einen Selbsttest durchführt, und
- der Selbsttest spätestens mit dem Ende des Zeitintervalls abgeschlossen und/oder abgebrochen wird.

Der erfindungsgemäße Vorschlag zur Optimierung der Zeiträume, die für Selbsttests des Ultraschall-Messsystems zur Verfügung stehen, geht dahin, den Selbsttest während eines Messzyklus durchzuführen. Dem liegt die Erkenntnis zugrunde, dass zwischen dem Aussenden eines Ultraschall-Messsignals durch ein Ultraschall-Sendeelement und dem Empfang des potentiell an einem Objekt reflektierten Ultraschall-Messsignals durch ein Ultraschall-Empfangselement eine gewisse Zeit verstreicht. Dies gilt auch dann, wenn das potentielle Objekt sich recht nahe am Ultraschall-Messsystem befindet.

Erfindungsgemäß wird nun das Ultraschall-Empfangselement in demjenigen Zeitraum diagnostiziert bzw. einem Selbsttest unterzogen, der verstreicht, bis das vom Ultraschall-Sendeelement ausgesendete Ultraschall-Messsignal auf sozusagen direktem Wege das Ultraschall-Empfangselement erreicht. Diese Zeitspanne ist definiert durch die Ausbreitungsgeschwindigkeit von Ultraschall-Signalen und den Abstand zwischen dem Ultraschall-Sendeelement und dem zu diagnostizierenden Ultraschall-Empfangselement. In der typischen Anwendung eines Ultraschall-Messsystems als Einparkhilfe eines Fahrzeugs befinden sich die Ultraschall-Elemente typischerweise in einem Abstand von 40 cm zueinander. Aufgrund der Schallgeschwindigkeit ergibt sich damit ein Zeitraum von etwa 1,2 ms. Während dieser Zeit empfängt ein Ultraschall-Empfangselement keine Signale seiner benachbarten Ultraschall-Sendeelemente, so dass diese Zeit genutzt werden kann, um einen Selbsttest durchzuführen. Der innerhalb des besagten Zeitraums durchgeführte Selbsttest erfolgt also ohne dass das betreffende Ultraschall-Empfangselement ein Ultraschall-Signal von außen, insbesondere das vom Ultraschall-Sendeelement ausgesendete Signal (ggf. als Reflektionssignal), empfängt. Es soll erfindungsgemäß nicht ausgeschlossen werden, dass das Ultraschall-Sendeelement von dem Kommunikationssystem, mit dem es elektrisch verbunden ist (Busanbindung), ein Steuersignal erhalten kann, das den Selbsttest auslöst bzw. Testsignale für den Selbsttest übermittelt.

Herkömmlicherweise werden heute insbesondere im Automotive-Bereich Ultraschall-Messsysteme mit Ultraschall-Transducern eingesetzt. Dabei arbeiten die Ultraschall-Transducer nicht notwendigerweise getrennt voneinander, sondern stehen über potentiell im Umfeld des Fahrzeugs befindliche Objekte in Wirkverbindung miteinander. Das erfindungsgemäße Verfahren kann bei einem derartigen Szenario dergestalt eingesetzt werden, dass das Ultraschall-Messsignal, dass ein Ultraschall-Transducer zunächst aussendet, um anschließend empfangsbereit für das potentielle Reflektionssignal zu sein, genutzt wird, um die Zeitspanne für den Selbsttest eines benachbarten Ultraschall-Transducers vorzugeben. Dieser benachbarte Ultraschall-Transducer würde in diesem Messzyklus kein Ultraschall-Messsignal aussenden, sondern auf den Empfang eines Ultraschall-Reflektionssignals warten. Wegen der geometrischen Anordnung der beiden Ultraschall-Transducer relativ zum potentiellen Hindernis kann man davon ausgehen, dass das an einem Objekt reflektierte Ultraschall-Messsignal des erstgenannten Ultraschall-Transducers den zu diagnostizierenden Ultraschall-Transducer erst nach Ablauf der oben definierten Zeitspanne erreicht. Damit kann diese Zeitspanne, die durch die Schallgeschwindigkeit und den Abstand zwischen den beiden Ultraschall-Transducern bestimmt ist, zu Selbsttestzwecken genutzt werden.

Dass bei dem zuvor beschriebenen Szenario diejenigen Ultraschall-Transducer, die diagnostiziert werden, sodann selbst keine Ultraschall-Messsignale aussenden (sollten), beeinträchtigt die Funktionsweise des Ultraschall-Messsystems nicht. Denn in einem Messsystem der zuvor beschriebenen Art kann durchaus ein Ultraschall-Transducer lediglich für den Empfang von Reflektionssignalen genutzt werden, ohne dass die Messergebnisse beeinträchtigt sind.

Mit dem erfindungsgemäßen Vorschlag wird also die Verfügbarkeit des Ultraschall-Messsignals in keiner Weise beeinträchtigt, obwohl das Ultraschall-Messsystems gegebenenfalls dauerhaft diagnostiziert und Selbsttests unterzogen wird. Selbstverständlich brauchen derartige Selbsttests nicht dauerhaft durchgeführt zu werden. Von Vorteil insoweit ist es aber dennoch, dass ein Selbsttest sozusagen zu jedem beliebigen Zeitpunkt während der Messfunktionalität des Messsystems, das heißt zu Beginn eines jeden Messzyklus durchgeführt werden kann.

In weiterer zweckmäßiger Ausgestaltung der Erfindung kann vorgesehen sein, dass das Messsystem mehrere Ultraschall-Sendeelemente und mehrere Ultraschall-Empfangselemente und/oder mehrere als Ultraschall-Transducer ausgebildete Kombinationen aus jeweils einem Ultraschall-Sendeelement und einem Ultraschall-Empfangselement aufweist und dass in einem Messzyklus zumindest ein Ultraschall-Sendeelement ein Ultraschall-Messsignal aussendet und für mehrere Ultraschall-Empfangselemente jeweils ein Selbsttest durchgeführt wird, und zwar innerhalb von Zeitintervallen, die jeweils mit dem Aussenden des Ultraschall-Messsignals beginnen und nach durch die Ausbreitungsgeschwindigkeit von Ultraschall-Signalen und die Abstände zwischen dem Ultraschall-Sendeelement und den jeweiligen Ultraschall-Empfangselementen definierten Zeiten enden.

Das erfindungsgemäße Verfahren lässt sich vor allem bei Messsystemen einsetzen, die mehrere Ultraschall-Elemente aufweist, von denen die einen als Ultraschall-Sendeelemente und die anderen als Ultraschall-Empfangselemente ausgebildet sind.

Wie bereits oben beschrieben, können die Ultraschall-Elemente der typischerweise eingesetzten Ultraschall-Messsysteme als mikroelektroakustische mechanische Elemente (MEAMF) ausgebildet sind.

Wie oben bereits erwähnt weist das Ultraschall-Messsystem mehrere jeweils als Kombination aus einem Ultraschall-Sender und einem Ultraschall-Empfänger ausgebildete Ultraschall-Transducer auf.

Neben der bereits oben beschriebenen Möglichkeit, als Ultraschall-Transducer im Rahmen der Erfindung auch solche Vorrichtungen aufzufassen, bei denen zwei mechanische mikroelektroakustische Elemente verbaut sind, von denen das eine als Sendeelement und das andere als Empfangselement fungiert, wird bei einem Ultraschall-Transducer herkömmlicher Bauart ein gemeinsames elektroakustisches Schwingelement eingesetzt, das sowohl das Ultraschall-Messsignal aussendet als auch Ultraschall-Signale und insbesondere Ultraschall-Reflektionssignale empfängt.

Wie oben ebenfalls schon erwähnt, ist es zweckmäßig, einen Ultraschall-Transducer ausschließlich als Ultraschall-Empfänger zu betreiben, wenn der Transducer diagnostiziert bzw. einem Selbsttest unterzogen werden soll.

In weiterer zweckmäßiger Ausgestaltung der Erfindung kann vorgesehen sein, dass das Messsystem eine Steuereinheit aufweist und dass die Ultraschall-Sendeelemente und Ultraschall-Empfangselemente zur Initiierung eines Messzyklus mit oder ohne Selbsttest angesteuert werden.

Schließlich kann in zweckmäßiger Ausgestaltung der Erfindung auch noch vorgesehen sein, dass bei einem Selbsttest erforderliche Signale und/oder anfallende Daten zur Analyse des Zustands und/oder der Funktionalität des Ultraschall-Empfangselements und/oder des Ultraschall-Sendeelements eines als Kombination aus einem Ultraschall-Sendeelement und einem Ultraschall-Empfangselement ausgebildeten Ultraschall-Transducers ausgewertet werden.

Der wesentliche Vorteil des erfindungsgemäßen Ansatzes ist die Optimierung der Verfügbarkeit eines Ultraschall-Messsystems zu Messzwecken. Dadurch, dass in Abkehr bekannter Systeme für die Durchführung des Selbsttests keine Zeiträume außerhalb der Messzeit zur Verfügung gestellt werden müssen, kann die aktive Messzeit verlängert werden, so dass die Messungen ohne Unterbrechungen durchgeführt werden können und dadurch mehr Messdaten für das Ultraschallsystem zur Verfügung stehen. Dies ist wiederum wichtig in der Anwendung der Erfindung im Automotive-Bereich bei Fahrerassistenzsystemen. Mit der Erfindung können also nun bisher ungenutzte Zeiten genutzt werden, um Messungen durchzuführen, ohne auf Selbsttests verzichten zu müssen.

Die Selbsttests können gemäß unterschiedlichster Szenarien auf Basis intern erzeugter oder von extern über eine Busanbindung des Ultraschall-Empfangselements erzeugter Signalen durchgeführt werden. Als Beispiel für einen Selbsttest eines Ultraschall-Empfangselements sei auf WO-A-2019/030113 verwiesen.

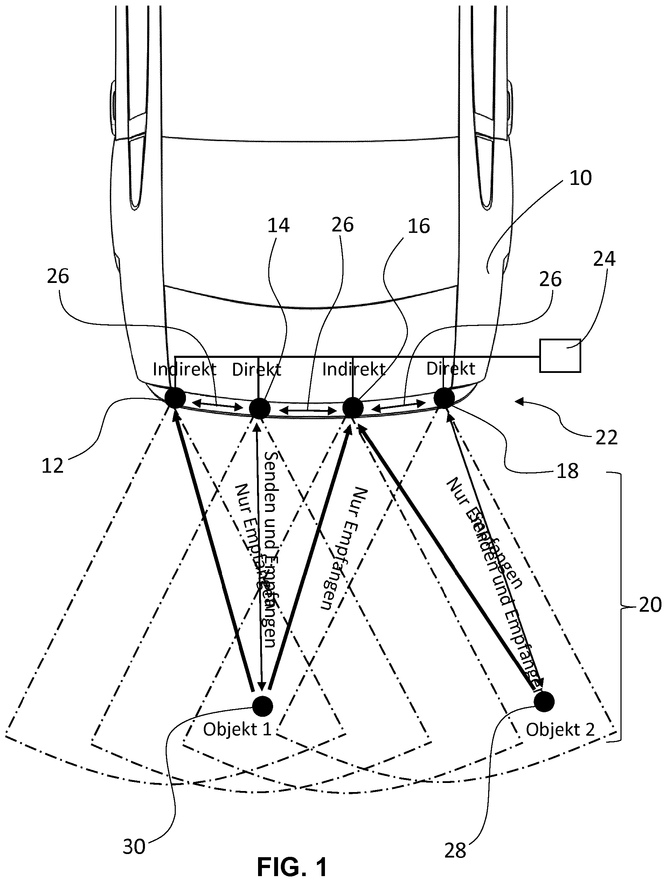

Die Erfindung wird nachfolgend anhand der Zeichnung näher erläutert. In der Zeichnung ist schematisch eine Draufsicht auf das Heck eines Fahrzeugs gezeigt, in dessen Stoßfänger vier Ultraschall-Elemente in Form von Ultraschall-Transducern angeordnet sind, die z. B. über ein Bussystem mit einer Steuereinheit (oder in Form von "Point-to-Point") zusammenarbeiten.

Im Heck des Fahrzeugs 10 sind beispielsweise vier Ultraschall-Transducer 12, 14, 16 und 18 verbaut, deren Ultraschallsignale in einen Erfassungsraum 20 ausgesendet werden. Das Ultraschall-Messsystem 22 weist darüber hinaus eine (zentrale) Steuereinheit 24 auf, die die Ultraschall-Elemente 12, 14, 16, 18 ansteuert und deren gegebenenfalls vorverarbeitete Empfangssignale empfängt. Die Steuereinheit 24 kann diese Empfangssignale selbst weiterverarbeiten oder aber auch diese Signale gegebenenfalls nach einer Zwischenverarbeitung an eine (nicht dargestellte) übergeordnete Steuereinheit weiterleiten. All dies ist für die Erfindung von untergeordneter Bedeutung.

Wie bereits oben beschrieben, sind die vier Ultraschall-Elemente als Ultraschall-Transducer ausgeführt. Der Abstand 26 benachbarter Ultraschall-Transducer ist jeweils bekannt. In diesem Ausführungsbeispiel sei angenommen, dass die vier Ultraschall-Transducer jeweils in einem Abstand von 40 cm benachbart zueinander angeordnet sind. Die Laufzeit für ein Ultraschall-Messsignal, das beispielsweise vom Ultraschall-Transducer 12 ausgesendet wird, beträgt demnach 1,2 ms, bis dieses Ultraschall-Messsignal auf direktem Wege den benachbarten Transducer 14 erreicht. Die Signalstrecke kann dabei über die Luft oder aber über das Material des Stoßfängers gegeben sein.

In einem möglichen Szenario zur Umsetzung des erfindungsgemäßen Verfahrens wird beispielsweise dergestalt verfahren, dass die beiden Ultraschall-Transducer 14 und 18 im Sende/Empfangs-Modus arbeiten, während die beiden anderen Ultraschall-Transducer 12, 16 ausschließlich im Empfangsmodus betrieben werden. In dieser Konstellation können, wie beispielhaft in der Zeichnung verdeutlicht, zwei unterschiedliche Objekte 28, 30 detektiert werden. Das Objekt 28 reflektiert das vom Ultraschall-Transducer 18 ausgesendete Ultraschall-Messsignal sowohl zum Ultraschall-Transducer 18 zurück als auch in Richtung auf den benachbarten Ultraschall-Transducer 16, der im Empfangsmodus arbeitet. Ebenso wird das vom Ultraschall-Transducer 14 ausgesendete Ultraschall-Messsignal vom Objekt 30 einerseits zurück zum Ultraschall-Transducer 14 reflektiert, gelangt aber auch andererseits zu den benachbarten Ultraschall-Transducer 12 und 16. Mit Beginn des Aussendens der Ultraschall-Messsignale durch die Ultraschall-Transducer 14, 18 beginnt die Zeitspanne, innerhalb derer die im Empfangsmodus betriebenen Ultraschall-Transducer 14, 16 einen Selbsttest durchführen können. Die Zeitspanne endet in diesem Ausführungsbeispiel nach etwa 1,2 ms. Im Regelfall reicht diese Zeit aus, um zumindest einen Teil der zur Aufrechterhaltung der Funktionalität des Systems erforderlichen Selbsttestschritte durchzuführen. Über mehrere derartige Zeiträume hinweg kann dann, wenn in dem Zeitraum nicht der gesamte Selbsttest durchgeführt werden kann, sozusagen schrittweise der Selbsttest durchgeführt werden.

Der zuvor beschriebene unterschiedliche Betrieb der vier Ultraschall-Transducer 12, 14, 16, 18 kann alternierend oder zyklisch vertauscht bzw. durchlaufend durchgeführt werden, so dass nach und nach sämtliche Ultraschall-Transducer auf ihre Funktionalität hin untersucht werden können.

Im Vorhergehenden wurde von der Durchführung des Selbsttests gesprochen. Neben dem Selbsttest kann aber auch noch eine Diagnose durchgeführt werden.

### BEZUGSZEICHENLISTE

10 Fahrzeug
12 Ultraschall-Transducer (Ultraschall-Element)
14 Ultraschall-Transducer (Ultraschall-Element)
16 Ultraschall-Transducer (Ultraschall-Element)
18 Ultraschall-Transducer (Ultraschall-Element)
20 Erfassungsraum
22 Ultraschall-Messsystem
24 Steuereinheit
26 Abstand zwischen zwei Ultraschall-Transducern
28 Objekt
30 Objekt

## Patentansprüche

1. Verfahren zur Detektion von Objekten in einem Erfassungsraum im Umfeld eines Fahrzeugs mittels eines Ultraschall-Messsystems (22) und zur Durchführung eines Selbsttests eines Ultraschall-Empfangselements des Ultraschall-Messsystems, wobei das Ultraschall-Messsystem zusätzlich zu dem am Fahrzeug angeordneten Ultraschall-Empfangselement ein ebenfalls am Fahrzeug in einem bekannten Abstand zu dem Ultraschall-Empfangselement angeordnetes Ultraschall-Sendeelement aufweist, wobei bei dem Verfahren
- mittels eines Ultraschall-Sendeelements (12, 14, 16, 18) während eines Messzyklus zwecks Detektion von Objekten (28, 30) in dem Erfassungsraum (20) ein Ultraschall-Messsignal ausgesendet wird,
- innerhalb eines durch die Ausbreitungsgeschwindigkeit von Ultraschall-Signalen und den Abstand (26) zwischen dem Ultraschall-Sendeelement (12, 14, 16, 18) und dem Ultraschall-Empfangs-element (12, 14, 16, 18) definierten, mit der Aussendung des Ultraschall-Messsignals beginnenden Zeitintervalls, innerhalb dessen das von dem Ultraschall-Sendeelement (12, 14, 16, 18) ausgesendete Messsignal das Ultraschall-Empfangselement (12, 14, 16, 18) noch nicht erreicht hat, das Ultraschall-Empfangselement (12, 14, 16, 18) einen Selbsttest durchführt, und
- der Selbsttest spätestens mit dem Ende des Zeitintervalls abgeschlossen oder abgebrochen wird.

2. Verfahren nach Anspruch 1, wobei das Messsystem mehrere Ultraschall-Sendeelemente (12, 14, 16, 18) und mehrere Ultraschall-Empfangselemente (12, 14, 16, 18) und/oder mehrere als Ultraschall-Transducer (12, 14, 16, 18) ausgebildete Kombinationen aus jeweils einem Ultraschall-Sendeelement (12, 14, 16, 18) und einem Ultraschall-Empfangselement (12, 14, 16, 18) aufweist und dass in einem Messzyklus zumindest ein Ultraschall-Sendeelement (12, 14, 16, 18) ein Ultraschall-Messsignal aussendet und für mehrere Ultraschall-Empfangselemente (12, 14, 16, 18) jeweils ein Selbsttest durchgeführt wird, und zwar innerhalb von Zeitintervallen, die jeweils mit dem Aussenden des Ultraschall-Messsignals beginnen und nach einer durch die Ausbreitungsgeschwindigkeit von Ultraschall-Signalen und die Abstände (26) zwischen dem Ultraschall-Sendeelement (12, 14, 16, 18) und den jeweiligen Ultraschall-Empfangselementen (12, 14, 16, 18) definierten Zeiten enden und innerhalb derer damit das von dem Ultraschall-Sendeelement (12, 14, 16, 18) ausgesendete Messsignal das betreffende Ultraschall-Empfangselement (12, 14, 16, 18) noch nicht erreicht hat.

3. Verfahren nach Anspruch 1 oder 2, wobei das Ultraschall-Messsystem (22) mehrere Ultraschall-Elemente aufweist, von denen die einen als Ultraschall-Sendeelemente (12, 14, 16, 18) und die anderen als Ultraschall-Empfangselemente (12, 14, 16, 18) ausgebildet sind.

4. Verfahren nach Anspruch 3, wobei die Ultraschall-Elemente als mikroelektroakustische, mechanische Elemente (MEAMF) ausgebildet sind.

5. Verfahren nach einem der Ansprüche 1 oder 2, wobei das Ultraschall-Messsystem (22) mehrere jeweils als Kombination aus einem Ultraschall-Sender und einem Ultraschall-Empfänger ausgebildete Ultraschall-Transducer (12, 14, 16, 18) aufweist.

6. Verfahren nach Anspruch 5, wobei bei einem Ultraschall-Transducer (12, 14, 16, 18) ein gemeinsames elektroakustisches Schwingelement sowohl das Ultraschall-Messsignal aussendet als auch Ultraschall-Signale und insbesondere Ultraschall-Reflektionssignale empfängt.

7. Verfahren nach einem der Ansprüche 2 bis 6, wobei ein Ultraschall-Transducer (12, 14, 16, 18) zu Selbsttestzwecken als Ultraschall-Sender betrieben wird.

8. Verfahren nach einem der Ansprüche 1 bis 7, wobei das Messsystem eine Steuereinheit (24) aufweist und dass die Ultraschall-Sendeelemente (12, 14, 16, 18) und Ultraschall-Empfangselemente (12, 14, 16, 18) zur Initiierung eines Messzyklus mit oder ohne Selbsttest von der Steuereinheit (24) angesteuert werden.

9. Verfahren nach einem der Ansprüche 1 bis 8, wobei bei einem Selbsttest erforderliche Signale und/oder anfallende Daten zur Analyse des Zustands und/oder der Funktionalität eines Ultraschall-Empfangselements (12, 14, 16, 18) und/oder eines Ultraschall-Sendeelements (12, 14, 16, 18) oder des Ultraschall-Empfangselements (12, 14, 16, 18) und/oder des Ultraschall-Sendeelements (12, 14, 16, 18) eines als Kombination aus einem Ultraschall-Sendeelement (12, 14, 16, 18) und einem Ultraschall-Empfangselement (12, 14, 16, 18) ausgebildeten Ultraschall-Transducers (12, 14, 16, 18) ausgewertet werden.

## Claims

1. Method for detecting objects in a detection range in the environment of a vehicle using an ultrasound measuring system (22) and for performing a self-test of an ultrasound receiving element of the ultrasound measuring system, the ultrasound measuring system comprising, in addition to the ultrasound receiving system arranged on the vehicle, an ultrasound transmitting element also arranged on the vehicle at a known distance from the ultrasound receiving element, wherein in the method
- an ultrasound measuring signal is emitted by means of an ultrasound transmitting element (12, 14, 16, 18) during a measuring cycle so as to detect objects (28, 30) in the detection range (20),
- the ultrasound receiving element (12, 14, 16, 18) performs a self-test within a time interval within which the measuring signal emitted by the ultrasound transmitting element (12, 14, 16, 18) has not yet reached the ultrasound receiving element (12, 14, 16, 18), said interval being defined by the propagation speed of ultrasound signals and the distance (26) between the ultrasound transmitting element (12, 14, 16, 18) and the ultrasound receiving element (12, 14, 16, 18) and starting with the emission of the ultrasound measuring signal, and
- the self-test is terminated or aborted at the end of the time interval at the latest.

2. Method according to claim 1, wherein the measuring system comprises a plurality of ultrasound transmitting elements (12, 14, 16, 18) and a plurality of ultrasound receiving elements (12, 14, 16, 18) and/or a plurality of ultrasound receiving elements (12, 14, 16, 18) and/or a plurality of combinations each of one ultrasound transmitting element (12, 14, 16, 18) and one ultrasound receiving element (12, 14, 16, 18), configured as ultrasound transducers (12, 14, 16, 18), and wherein, in a measuring cycle, at least one ultrasound transmitting element (12, 14, 16, 18) emits an ultrasound measuring signal and a self-test is performed for each of a plurality of ultrasound receiving elements (12, 14, 16, 18), namely within time intervals each starting with the emission of the ultrasound measuring signal and ending after periods defined by the propagation speed of ultrasound signals and the distances (26) between the ultrasound transmitting element (12, 14, 16, 18) and the respective ultrasound receiving elements (12, 14, 16, 18) and within which the measuring signal emitted by the ultrasound transmitting element (12, 13, 16, 18) has not yet reached the respective ultrasound receiving element (12, 14, 16, 18).

3. Method according to claim 1 or 2, wherein the ultrasound measuring system (22) comprises a plurality of ultrasound elements of which some are configured as ultrasound transmitting elements (12, 14, 16, 18) and others are configured as ultrasound receiving elements (12, 14, 16. 18).

4. Method according to claim 3, wherein the ultrasound elements are configured as micro-electro-acoustic mechanical elements (MEAMF).

5. Method according to one of claims 1 or 2, wherein the ultrasound measuring system (22) comprises a plurality of ultrasound transducers (12, 14, 16, 18), each configured as a combination of an ultrasound transmitter and an ultrasound receiver.

6. Method according to claim 5, wherein, in an ultrasound transducer (12, 14, 16, 18), a common electro-acoustic oscillating element both emits the ultrasound measuring signal and receives ultrasound signals and in particular ultrasound reflection signals.

7. Method according to any one of claims 2 to 6, wherein an ultrasound transducer (12, 14, 16, 18) is operated as an ultrasound transmitter for self-test purposes.

8. Method according to any one of claims 1 to 7, wherein the measuring system comprises a control unit (24), and wherein the ultrasound transmitting elements (12, 14, 16, 18) and the ultrasound receiving elements (12, 14, 16, 18) are controlled by the control unit (24) to initiate a measuring cycle with or without a self-test.

9. Method according to any one of claims 1 to 8, wherein, in a self-test, required signals and/or produced data are evaluated for an analysis of the state and/or the functionality of an ultrasound receiving element (12, 14, 16, 18) and/or an ultrasound transmitting element (12, 14, 16, 18) or the ultrasound receiving element (12, 14, 16, 18) and/or the ultrasound transmitting element (12, 14, 16, 18) of an ultrasound transducer (12, 14, 16, 18) configured as a combination of an ultrasound receiving element (12, 14, 16, 18) and an ultrasound transmitting element (12, 14, 16, 18).

## Revendications

1. Procédé permettant la détection d'objets dans un espace de détection à proximité d'un véhicule au moyen d'un système de mesure à ultrasons (22) et permettant l'exécution d'un autodiagnostic d'un élément de réception d'ultrasons du système de mesure à ultrasons, dans lequel le système de mesure à ultrasons présente, outre l'élément de réception d'ultrasons disposé sur le véhicule, un élément d'émission d'ultrasons disposé également sur le véhicule à une distance connue de l'élément de réception d'ultrasons, dans lequel, lors du procédé,
- un signal de mesure à ultrasons est émis au moyen d'un élément d'émission d'ultrasons (12, 14, 16, 18) pendant un cycle de mesure en vue d'une détection d'objets (28, 30) dans l'espace de détection (20),
- lors d'un intervalle de temps défini par la vitesse de propagation de signaux à ultrasons et par la distance (26) entre l'élément d'émission d'ultrasons (12, 14, 16, 18) et l'élément de réception d'ultrasons (12, 14, 16, 18), commençant par l'émission du signal de mesure à ultrasons et pendant lequel le signal de mesure émis par l'élément d'émission d'ultrasons (12, 14, 16, 18) n'a pas encore atteint l'élément de réception d'ultrasons (12, 14, 16, 18), l'élément de réception d'ultrasons (12, 14, 16, 18) exécute un autodiagnostic, et
- l'autodiagnostic est terminé ou interrompu au plus tard à la fin de l'intervalle de temps.

2. Procédé selon la revendication 1, dans lequel le système de mesure présente plusieurs éléments d'émission d'ultrasons (12, 14, 16, 18) et plusieurs éléments de réception d'ultrasons (12, 14, 16, 18) et/ou plusieurs combinaisons, réalisées sous forme de transducteurs ultrasons (12, 14, 16, 18), de respectivement un élément d'émission d'ultrasons (12, 14, 16, 18) et d'un élément de réception d'ultrasons (12, 14, 16, 18) **et en ce que,** dans un cycle de mesure, au moins un élément d'émission d'ultrasons (12, 14, 16, 18) émet un signal de mesure à ultrasons et, en présence de plusieurs éléments de réception d'ultrasons (12, 14, 16, 18), respectivement un autodiagnostic est exécuté, et ce lors d'intervalles de temps qui commencent respectivement par l'émission du signal de mesure à ultrasons et qui prennent fin après un temps défini par la vitesse de propagation de signaux à ultrasons et par les distances (26) entre l'élément d'émission d'ultrasons (12, 14, 16, 18) et les éléments de réception d'ultrasons (12, 14, 16, 18) respectifs et lors desquels le signal de mesure émis par l'élément d'émission d'ultrasons (12, 14, 16, 18) n'a donc pas encore atteint l'élément de réception d'ultrasons (12, 14, 16, 18) concerné.

3. Procédé selon la revendication 1 ou 2, dans lequel le système de mesure à ultrasons (22) présente plusieurs éléments à ultrasons, dont les uns sont réalisés sous forme d'éléments d'émission d'ultrasons (12, 14, 16, 18) et les autres sous forme d'éléments de réception d'ultrasons (12, 14, 16, 18).

4. Procédé selon la revendication 3, dans lequel les éléments à ultrasons sont réalisés sous forme d'éléments mécaniques microélectroacoustiques (MEAMF).

5. Procédé selon l'une des revendications 1 ou 2, dans lequel le système de mesure à ultrasons (22) présente plusieurs transducteurs ultrasons (12, 14, 16, 18) respectivement réalisés sous forme de combinaison d'un émetteur d'ultrasons et d'un récepteur d'ultrasons.

6. Procédé selon la revendication 5, dans lequel, en présence d'un transducteur ultrason (12, 14, 16, 18), un élément oscillant électroacoustique commun émet le signal de mesure à ultrasons et reçoit également des signaux à ultrasons et en particulier des signaux de réflexion à ultrasons.

7. Procédé selon l'une des revendications 2 à 6, dans lequel un transducteur ultrason (12, 14, 16, 18) fonctionne comme émetteur d'ultrasons à des fins d'autodiagnostic.

8. Procédé selon l'une des revendications 1 à 7, dans lequel le système de mesure présente une unité de commande (24) **et en ce que** les éléments d'émission d'ultrasons (12, 14, 16, 18) et les éléments de réception d'ultrasons (12, 14, 16, 18) sont commandés par l'unité de commande (24) pour initier un cycle de mesure avec ou sans autodiagnostic.

9. Procédé selon l'une des revendications 1 à 8, dans lequel, lors d'un autodiagnostic, des signaux nécessaires et/ou des données produites pour l'analyse de l'état et/ou de la fonctionnalité d'un élément de réception d'ultrasons (12, 14, 16, 18) et/ou d'un élément d'émission d'ultrasons (12, 14, 16, 18) ou de l'élément de réception d'ultrasons (12, 14, 16, 18) et/ou de l'élément d'émission d'ultrasons (12, 14, 16, 18) d'un transducteur ultrason (12, 14, 16, 18) réalisé sous forme de combinaison d'un élément d'émission d'ultrasons (12, 14, 16, 18) et d'un élément de réception d'ultrasons (12, 14, 16, 18) sont évalués.
